# EUROPEAN PATENT SPECIFICATION

(11) **EP 3 805 074 B1**
(45) Date of publication and mention of the grant of the patent: **28.06.2023**
(21) Application number: 20201372.8
(22) Date of filing: 12.10.2020
(51) Int. Cl.: B62D 21/20, B62D 63/06, B62D 33/04

(54) **MOVING FLOOR TRAILER WITH A SIDE WALL WHICH CAN BE OPENED**
SCHUBBODEN-ANHÄNGER MIT EINER ZU ÖFFNENDEN SEITENWAND
REMORQUE À PLANCHER MOBILE AVEC UNE PAROI LATÉRALE QUI PEUT ÊTRE OUVERTE

(30) Priority: 11.10.2019 NL 2024000
(43) Date of publication of application: 14.04.2021
(73) Proprietor: Knapen Trailers B.V., 5753 DL Deurne (NL)
(72) Inventor: Buijtels, Angelo Antonius Sebastiaan Gerardus, 5753 DL Deurne (NL); Van Lieshout, Joey Wilhelmus Gerardus Bernardus, 5753 DL Deurne (NL)
(74) Representative: Arnold & Siedsma

(56) References cited:
- EP-A2- 2 218 600
- WO-A2-2004/067316
- GB-A- 2 152 568
- JP-U- S5 848 585
- US-A- 6 116 679

## Description

The present invention relates to a moving floor trailer with a side wall which can be opened. The invention relates more particularly to a trailer comprising an elongate chassis and a superstructure arranged on the chassis, wherein the trailer has a first side and an opposite second side, each extending substantially parallel relative to a central longitudinal axis of the chassis, wherein on the first side a side wall of the superstructure takes for the most part a fixed form, for instance with fixedly disposed plate parts, and wherein on the second side a side wall of the superstructure is embodied for the most part with doors. Such a trailer will be referred to in the following as side door trailer.

Such a side door trailer is known from the prior art. This trailer can for instance be used to transport large or indivisible cargo which cannot be loaded through a usual door on the rear side of the trailer.

A standard moving floor trailer has a superstructure with two fixed side walls and is provided with a chassis which takes a light form and which stops at the support legs. The part between the chassis and the coupling section with coupling pin whereby the trailer can be coupled to the tractive vehicle is cantilevered, meaning that the superstructure takes on the supporting function of the chassis.

In line with the above stated principle, a side door trailer with closed doors and closing elements taking a sufficiently strong form does not need a continuous chassis either in closed position. A continuous chassis is however required on the opened side, since the bending stiffness of the side wall is lost when it is opened. A trailer wherein a side is substantially wholly formed by side doors is therefore equipped as standard with a continuous chassis. A continuous chassis is necessary in order to create sufficient bending stiffness and stability during loading and unloading via the side. If the bending stiffness is insufficient, an element which generally extends only along the longitudinal axis can bend in a direction perpendicularly of the longitudinal axis, for instance in downward direction. If this element forms part of for instance a closing element for the doors of the side door trailer, problems may arise during closing of the doors after the trailer has been loaded. The closing element may thus require alignment of coupling means situated in the doors and the remaining part of the trailer. The doors can then no longer be closed, or closed less well, due to the loss or deterioration of alignment of the coupling means.

The continuous chassis provides for sound support in all situations. The addition of the superstructure immensely increases the bending stiffness of the chassis, since the superstructure is also supportive. The fixed wall on the first side imparts a lot of bending stiffness to the construction owing to the large plate surface. On the other side are the side doors. In closed position these also provide bending stiffness.

During loading on the side, this bending stiffness is temporarily absent because the doors on the second side are then open. This results in a large difference in bending stiffness between the first and second side of the trailer, both in the chassis and in the superstructure itself. Due to this large difference, the chassis will deform more on the second side with the side doors than on the first side where the fixed wall is located.

Due to the non-symmetrical bending in the chassis and the rigid fixed wall, deformation also results in the chassis. This deformation is passed on by the chassis to the superstructure. The side with opened doors provides no resistance to the displacements occurring in the chassis. Due to these displacements, the door handles move away from the closing elements and the doors are almost impossible to close. Increasing the maximum load in the known side door trailer is therefore achieved by giving the chassis a heavier form. This has adverse effects on the fuel consumption of the tractive vehicle and the maximum load which can be transported with the trailer.

A side door trailer as described in the preamble of claim 1 is known from GB 2152568A and EP 2218600A2.

An object of the present invention is to provide a side door trailer which can be manufactured with a lower weight than the known side door trailer.

This object is achieved by means of the trailer according to claim 1, which is characterized in that the chassis has an asymmetrical form relative to the central longitudinal axis for the purpose of at least partially compensating for a decrease in bending stiffness on the second side of the trailer as a result of the doors being open.

According to the invention, the above stated problem is solved by imparting asymmetry to the bending stiffness of the chassis. More specifically, where the wall can be opened by the doors the chassis takes a heavy form in order to prevent sagging. Where the wall is fixedly disposed, the chassis can take a lighter form because the wall provides for the supporting function. This makes it possible to provide a side door trailer which is lighter than known side door trailers but which still has the necessary bending stiffness. Owing to the asymmetrical chassis, the deformations in the trailer are much smaller and the side doors can be closed with less force after loading.

It is preferred for the chassis to be configured such that the trailer has in a state with closed doors an asymmetry in bending stiffness between the first and second side which is greater than the asymmetry in bending stiffness between the first and second side in a state with opened doors. The chassis is preferably configured such that the trailer has in the state with opened doors a bending stiffness which is substantially the same on the first and second side.

The side wall on the first side preferably does not comprise a door, but is preferably constructed solely from plate material. At least 60 percent of a surface of the side wall on the second side further consists of doors, more preferably at least 80 percent.

The chassis can comprise a coupling section with coupling pin for the purpose of coupling the trailer to a fifth wheel of a tractive vehicle, such as a truck or other type of vehicle. The chassis can here comprise, as seen in the longitudinal direction, a first part which extends from the coupling section with coupling pin to a front side of the trailer and a second part which extends from the coupling section with coupling pin to a rear side of the trailer.

It is preferred to embody the first part and the second part of the trailer differently in respect of the asymmetry of the chassis. The chassis can thus comprise a pair of longitudinal beams which are placed at a distance from each other and are connected to each other by a plurality of transverse connections, wherein the longitudinal beams extend at least in the second part and wherein the bending stiffness of the chassis in the second part on the second side is higher than the bending stiffness of the chassis in the second part on the first side. The increased bending stiffness of the chassis in the second part on the second side relative to the bending stiffness of the chassis in the second part on the first side can be realized by embodying the longitudinal beam on the second side in the second part with more bending stiffness than the longitudinal beam on the first side in the second part.

The longitudinal beams can additionally or alternatively also extend in the first part, wherein the bending stiffness of the chassis in the first part on the first side is higher than the bending stiffness of the chassis in the first part on the second side. The asymmetry in bending stiffness of the chassis between the first and second side in the first part is hereby opposite to the asymmetry in the second part. It has been found by applicant that the combination of the asymmetry in the first and second part results in a reduction of stress in the chassis and more particularly in the front side of the trailer, such as the part of the trailer situated between the front wall and the coupling section with coupling pin.

The increased bending stiffness of the chassis in the first part on the first side relative to the bending stiffness of the chassis in the first part on the second side can be realized by embodying the longitudinal beam on the first side in the first part with more bending stiffness than the longitudinal beam on the second side in the first part.

There are various ways of embodying a longitudinal beam with more bending stiffness. It is however preferred for each longitudinal beam to comprise a first and second horizontally disposed section which are mutually connected by a transverse section, wherein the increased bending stiffness of a longitudinal beam or part thereof relative to the other longitudinal beam or part thereof is achieved by giving at least one of the first horizontal section, the second horizontal section and the transverse section of that longitudinal beam or part thereof a thicker form than the respective first horizontal section, second horizontal section and transverse section of the other longitudinal beam or part thereof. A thickness of at least one of the first horizontal section, the second horizontal section and the transverse section of that longitudinal beam or part thereof can be at least 25 percent greater, more preferably 50 percent, than the respective first horizontal section, second horizontal section and transverse section of the other longitudinal beam or part thereof.

The chassis can comprise a group of wheel-bearing shafts which are situated close to a rear side of the trailer, wherein the second part of the chassis has a middle part which extends substantially between the first part and the group of wheel-bearing shafts, and an end part which extends substantially between the middle part and the rear side of the trailer. The longitudinal beams can here have a mutually differing bending stiffness in the middle part. It is however preferred for the longitudinal beams to have substantially the same bending stiffness in the end part.

The middle part preferably extends from the first part to at least a position beyond a central point of the group of wheel-bearing shafts, as seen in the longitudinal direction. At least the wheel-bearing shaft of the group of wheel-bearing shafts which is placed closest to the rear side can be air-suspended from the chassis. The trailer can further be provided with venting means for venting the air suspension of the wheel-bearing shaft placed closest to the rear side. This provides the option for the user to vent the wheel-bearing shaft placed closest to the rear side prior to, during or after loading of the trailer and prior to closing of the doors. This will reduce the support of the end part by the group of wheel-bearing shafts. The pressure exerted by the cargo in the end part on this end part can provide for a slight bending of the chassis in the middle part, which counteracts or at least partially compensates for a bend caused by cargo in the middle part.

The invention particularly relates to a side door trailer wherein the superstructure comprises a front wall on the front side of the trailer and an end wall on the rear side of the trailer, which connect the side walls to each other.

The invention further particularly relates to a side door trailer wherein the superstructure comprises a floor which is placed on the chassis and which extends between the front wall and the end wall. Such a trailer can comprise an upper connection which extends in height direction at a distance from and parallel to the floor between the front wall and the end wall on the second side of the trailer. The doors can here be locked relative to the floor and/or the upper connection.

The doors can be formed by a first door section and a second door section, each door section comprising a plurality of door panels connected in mutually pivotable manner, wherein at least a door panel of the first and second door section can be locked to the floor and/or upper connection. A door panel of the first door section can further comprise a first coupling means and a door panel of the second door section a second coupling means, wherein the first and second coupling means are configured for mutual coupling for the purpose of closing the doors of the trailer, and/or wherein the first and second coupling means are each configured for coupling to the upper connection and/or the floor for the purpose of closing the doors of the trailer.

The invention will be elucidated in more detail hereinbelow with reference to the accompanying figures, wherein identical reference numerals are used to designate identical or similar components, and wherein:
Figure 1 is a perspective view of an embodiment of a trailer according to the invention in closed state;
Figure 2 is a perspective view of the embodiment of the trailer of figure 1 in opened state;
Figure 3 is a perspective view of a chassis of the trailer of figure 1;
Figure 4 is a top view of the chassis of the trailer of figure 1; and
Figure 5 is a detail view of the front side of the chassis of figure 3.

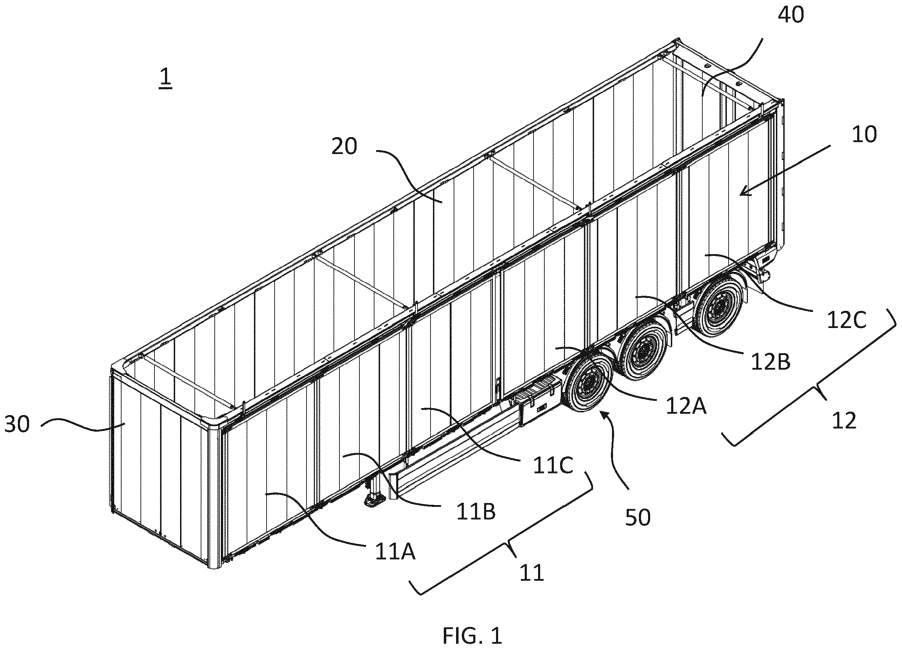

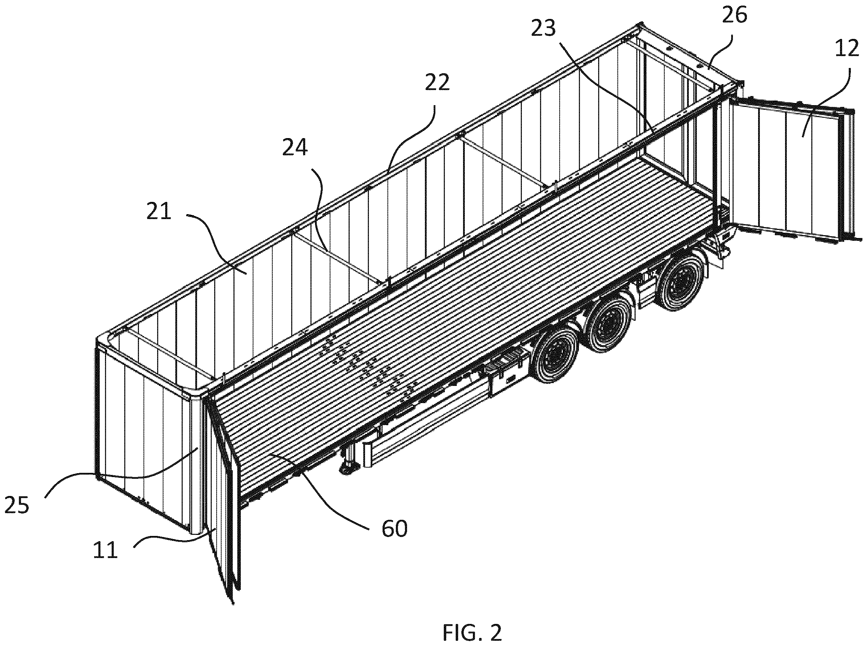

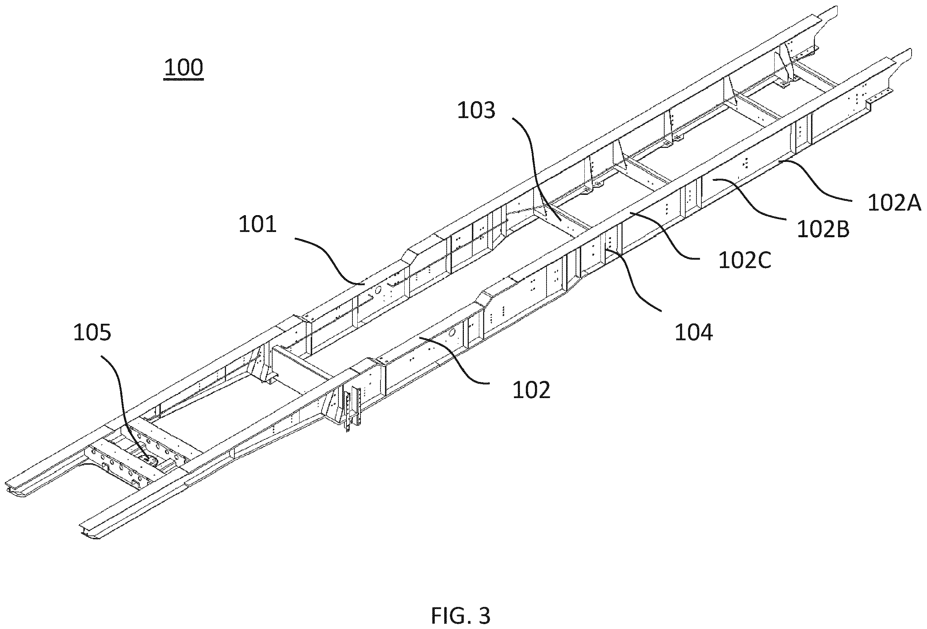

Figures 1 and 2 show a perspective view of an embodiment of a trailer 1 according to the invention in respectively closed and opened state. Trailer 1 comprises a superstructure with a side wall 10, a side wall 20, a front wall 30 and an end wall 40. End wall 40 is here formed in figure 2 by a pair of doors. The superstructure is mounted on a chassis 100, which is shown in more detail in figure 3. Trailer 1, and more particularly chassis 100, further comprises a group of wheel-bearing shafts 50. As shown in figure 2, trailer 1 comprises a floor 60 which is mounted on chassis 100. The superstructure further comprises a number of frame parts 22, 23, 24, 25, 26 for mounting of plate parts, such as plate part 21. Frame parts 22, 23 here form upper connections which extend substantially parallel to floor 60 between front wall 30 and end wall 40.

Side wall 10 is constructed from a first door section 11 and a second door section 12. First door section 11 comprises here three door panels 11A-11C which are attached in mutually pivotable manner. Second door section 12 comprises three door panels 12A-12C which are likewise mounted in mutually pivotable manner. For mounting of door sections 12C and 11A frame part 23 can comprise a profile configured for this purpose. A similar profile can be provided in floor 60 or chassis 100.

At least one door panel of first door section 11, preferably door panel 11C, and at least one door panel of second door section 12, preferably door panel 12A, are provided with a coupling means. The coupling means can be configured to lock door panel 11C to door panel 12A. It is however also possible for one or more door panels 11A-11C, 12A-12C to comprise coupling means for coupling to a frame part, such as frame part 23, floor 60 or another element for locking first door section 11 to second door section 12.

Figure 3 shows a perspective view of chassis 100. Chassis 100 comprises here a first longitudinal beam 101 and a second longitudinal beam 102. First longitudinal beam 101 here imparts bending stiffness to a first side of trailer 1, more particularly the side with side wall 20, and second longitudinal beam 102 imparts bending stiffness to a second side of trailer 1, more particularly the side with side wall 10.

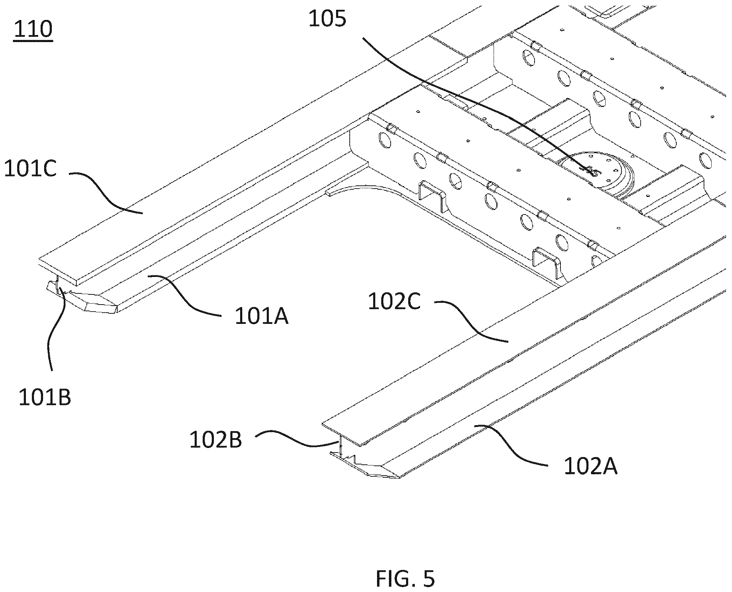

Each longitudinal beam 101, 102 comprises a pair of horizontal sections which are mutually connected by a transverse section. First longitudinal beam 101 thus comprises an upper horizontal section 101C and a lower horizontal section 101A which are connected by transverse section 101B, see figure 5, and second longitudinal beam 102 comprises an upper horizontal section 102C and a lower horizontal section 102A which are connected by transverse section 102B, see figures 3 and 5. Additional transverse connections can be provided for the purpose of connecting the horizontal sections. An example of such a connection is for instance plate part 104 in figure 3. Longitudinal beams 101, 102 are further connected in the horizontal plane by transverse connections 103.

Figure 3 shows a coupling section with coupling pin 105 with which trailer 1 can be coupled to a fifth wheel of a tractive vehicle. An example of a tractive vehicle is a truck.

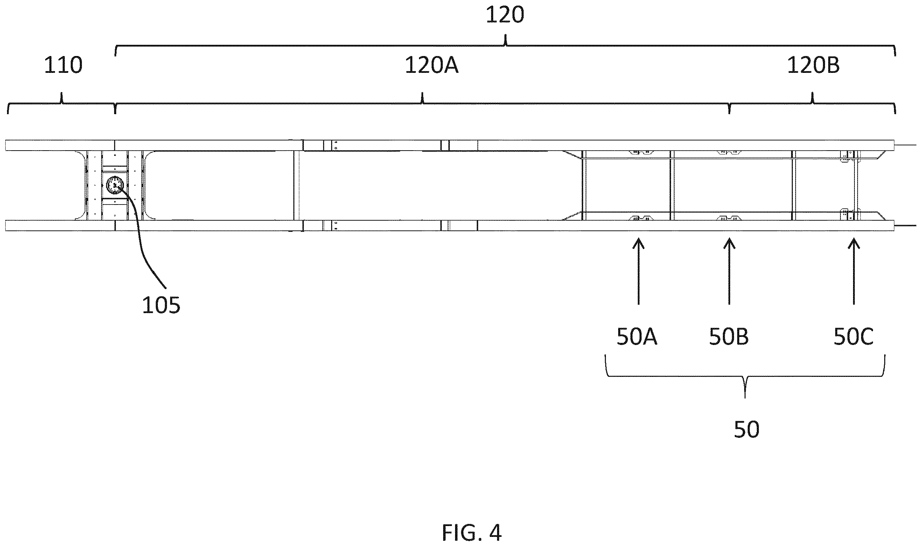

As shown in the top view of figure 4, chassis 100 can be divided into a first part 110 which extends between the front side of trailer 100 and coupling section with coupling pin 105, and a second part 120 which extends between coupling section with coupling pin 105 and the rear side of trailer 100. It is noted here that longitudinal beams 101, 102 need not extend over the whole length between front wall 30 and end wall 40. Sufficient bending stiffness of the first part can for instance already be achieved if longitudinal beams 101, 102 extend over two-thirds of the area between front wall 30 and coupling section with coupling pin 105.

Second part 120 can be divided into a middle part 120A and an end part 120B. Middle part 120A extends here between first part 110 and a central point of group of wheel-bearing shafts 50. Figure 4 shows the position of three wheel-bearing shafts 50A-50C, the shafts themselves are not shown. The central point corresponds to a point around which the supporting function of these shafts appears to be concentrated. In figure 4 this point corresponds roughly with the position 50B of the middle wheel-bearing shaft.

In chassis 100 of figure 3 there is a difference in bending stiffness symmetry between first part 110, middle part 120A and end part 120B. In first part 110 longitudinal beam 101 is thus embodied with more bending stiffness than longitudinal beam 102, and in middle part 120A longitudinal beam 102 is embodied with more bending stiffness than longitudinal beam 101. In end part 120B longitudinal beams 101, 102 are embodied with substantially equal bending stiffness.

The difference in asymmetry in bending stiffness between first part 110 and middle part 120A results in reduced mechanical stresses in the superstructure as compared not only to the situation where in first part 110 longitudinal beam 102 is embodied with more bending stiffness, but also compared to the situation where in first part 110 longitudinal beams 101, 102 are embodied with equal bending stiffness.

Wheel-bearing shafts usually take an air-suspended form, for instance with an air bellows. It has been found by applicant that if the air suspension of at least the wheel-bearing shaft lying closest to the rear side of trailer 1 can be vented, it is advantageous to embody longitudinal beams 101, 102 with equal bending stiffness in end part 120B. It has been found by applicant that during loading of trailer 1 in opened state as shown in figure 2, cargo, which presses onto end part 120B, can cause a slight bending of chassis 1 in middle part 120A. This slight bending can at least partially compensate for a bend caused by cargo pressing on middle part 120A, whereby closing of first door section 11 and second door section 12 can be performed easily. The air suspension of the shaft can be reset after closing of door sections 11, 12.

Figure 5 shows a detail view of the front side of chassis 1, more particularly of first part 110. This figure shows that the increased bending stiffness of first longitudinal beam 101 relative to second longitudinal beam 102 is achieved by giving horizontal sections 101A, 101C a thicker form than corresponding sections 102A, 102C of second longitudinal beam 102. The difference in bending stiffness in middle part 120A can be achieved in corresponding manner, albeit that in middle part 120A first longitudinal beam 101 is embodied with less bending stiffness than second longitudinal beam 102.

A difference in bending stiffness can additionally or alternatively be realized by a difference in strength and/or thickness of transverse section 101B, 102B.

It will be apparent that the present invention is not limited to the embodiments shown here but that various modifications are possible without departing from the scope of protection as defined by the appended claims.

## Claims

1. Trailer (1) comprising an elongate chassis (100) and a superstructure arranged on the chassis, wherein the trailer has a first side and an opposite second side, each extending substantially parallel relative to a central longitudinal axis of the chassis;
wherein on the first side a side wall (20) of the superstructure takes for the most part a fixed form, for instance with fixedly disposed plate parts, and wherein on the second side a side wall (10) of the superstructure is embodied for the most part with doors (11, 12);
**characterized in that** the chassis has an asymmetrical form relative to the central longitudinal axis for the purpose of at least partially compensating for a decrease in bending stiffness on the second side of the trailer as a result of the doors being open.

2. Trailer according to claim 1, wherein the chassis is configured such that the trailer has in a state with closed doors an asymmetry in bending stiffness between the first and second side which is greater than the asymmetry in bending stiffness between the first and second side in a state with opened doors, wherein the chassis is preferably configured such that the trailer has in the state with opened doors a bending stiffness which is substantially the same on the first and second side.

3. Trailer according to claim 1 or 2, wherein the side wall on the first side does not comprise a door and wherein at least 60 percent of a surface of the side wall on the second side consists of doors, more preferably at least 80 percent.

4. Trailer according to any one of the foregoing claims, wherein the chassis comprises a coupling section with coupling pin (105) for the purpose of coupling the trailer to a fifth wheel of a tractive vehicle, such as a truck or other type of vehicle, wherein the chassis comprises, as seen in the longitudinal direction, a first part (110) which extends from the coupling section with coupling pin to a front side of the trailer and a second part (120) which extends from the coupling section with coupling pin to a rear side of the trailer.

5. Trailer according to claim 4, wherein the chassis comprises a pair of longitudinal beams (101, 102) which are placed at a distance from each other and are connected to each other by a plurality of transverse connections (103), wherein the longitudinal beams extend at least in the second part and wherein the bending stiffness of the chassis in the second part on the second side is higher than the bending stiffness of the chassis in the second part on the first side.

6. Trailer according to claim 5, wherein the increased bending stiffness of the chassis in the second part on the second side relative to the bending stiffness of the chassis in the second part on the first side is realized by embodying the longitudinal beam on the second side in the second part with more bending stiffness than the longitudinal beam on the first side in the second part.

7. Trailer according to claim 5 or 6, wherein the longitudinal beams also extend in the first part, wherein the bending stiffness of the chassis in the first part on the first side is higher than the bending stiffness of the chassis in the first part on the second side;
wherein the increased bending stiffness of the chassis in the first part on the first side relative to the bending stiffness of the chassis in the first part on the second side is preferably realized by embodying the longitudinal beam on the first side in the first part with more bending stiffness than the longitudinal beam on the second side in the first part.

8. Trailer according to any one of the claims 5-7, wherein each longitudinal beam comprises a first and second horizontally disposed section (101A, 101C, 102A, 102C) which are mutually connected by a transverse section (101B, 102B), wherein the increased bending stiffness of a longitudinal beam or part thereof relative to the other longitudinal beam or part thereof is achieved by giving at least one of the first horizontal section, the second horizontal section and the transverse section of that longitudinal beam or part thereof a thicker form than the respective first horizontal section, second horizontal section and transverse section of the other longitudinal beam or part thereof;
wherein a thickness of at least one of the first horizontal section, the second horizontal section and the transverse section of that longitudinal beam or part thereof is preferably at least 25 percent greater, more preferably 50 percent, than the respective first horizontal section, second horizontal section and transverse section of the other longitudinal beam or part thereof.

9. Trailer according to any one of the claims 5-8, wherein the chassis comprises a group of wheel-bearing shafts (50) which are situated close to a rear side of the trailer, wherein the second part of the chassis has a middle part (120A) which extends substantially between the first part and the group of wheel-bearing shafts, and an end part (120B) which extends substantially between the middle part and the rear side of the trailer.

10. Trailer according to claim 9, wherein the longitudinal beams have a mutually differing bending stiffness in the middle part and/or wherein the longitudinal beams have substantially the same bending stiffness in the end part.

11. Trailer according to any one of the claims 9-10, wherein the middle part extends from the first part to at least a position beyond a central point of the group of wheel-bearing shafts, as seen in the longitudinal direction.

12. Trailer according to any one of the claims 9-11, wherein at least the wheel-bearing shaft of the group of wheel-bearing shafts which is placed closest to the rear side is air-suspended from the chassis, and wherein the trailer is provided with venting means for venting the air suspension of the wheel-bearing shaft placed closest to the rear side.

13. Trailer according to any one of the foregoing claims, wherein the superstructure comprises a front wall (30) on the front side of the trailer and an end wall (40) on the rear side of the trailer, which connect the side walls to each other.

14. Trailer according to any one of the foregoing claims, wherein the superstructure further comprises:
a floor (60) which is placed on the chassis and which extends between the front wall and the end wall; and
an upper connection (22, 23) which extends in height direction at a distance from and parallel to the floor between the front wall and the end wall on the second side of the trailer;
wherein the doors can be locked relative to the floor and/or the upper connection.

15. Trailer according to claim 14, wherein the doors are formed by a first door section (11) and a second door section (12), each door section comprising a plurality of door panels (11A, 11B, 11C, 12A, 12B, 12C) connected in mutually pivotable manner, wherein at least a door panel of the first and second door section can be locked to the floor and/or upper connection;
wherein a door panel of the first door section preferably comprises a first coupling means and wherein a door panel of the second door section comprises a second coupling means, wherein the first and second coupling means are configured for mutual coupling for the purpose of closing the doors of the trailer and/or the first and second coupling means are each configured for coupling to the upper connection and/or the floor for the purpose of closing the doors of the trailer.

## Patentansprüche

1. Anhänger (1) mit einem langgestreckten Chassis (100) und einem auf dem Chassis angeordneten Aufbau, wobei der Anhänger eine erste Seite und eine gegenüberliegende zweite Seite hat, die sich jeweils im Wesentlichen parallel bezüglich einer Mittellängsachse des Chassis erstrecken;
wobei auf der ersten Seite eine Seitenwand (20) des Aufbaus größtenteils eine feste Form aufweist, beispielsweise mit fest angebrachten Plattenteilen, und wobei auf der zweiten Seite eine Seitenwand (10) des Aufbaus größtenteils mit Türen (11, 12) ausgebildet ist;
**dadurch gekennzeichnet, dass** das Chassis bezüglich der Mittellängsachse eine asymmetrische Form aufweist, um dadurch zumindest teilweise eine Abnahme der Biegesteifigkeit auf der zweiten Seite des Anhängers auszugleichen, wenn die Türen offen sind.

2. Anhänger nach Anspruch 1, wobei das Chassis derart ausgeführt ist, dass der Anhänger in einem Zustand mit geschlossenen Türen eine Asymmetrie in der Biegesteifigkeit zwischen der ersten und der zweiten Seite aufweist, die größer als die Asymmetrie in der Biegesteifigkeit zwischen der ersten und der zweiten Seite in einem Zustand mit geöffneten Türen ist, wobei das Chassis vorzugsweise so ausgeführt ist, dass der Anhänger in dem Zustand mit geöffneten Türen eine Biegesteifigkeit aufweist, die auf der ersten und der zweiten Seite im Wesentlichen gleich ist.

3. Anhänger nach Anspruch 1 oder 2, wobei die Seitenwand auf der ersten Seite keine Tür enthält und wobei mindestens 60 Prozent einer Oberfläche der Seitenwand auf der zweiten Seite aus Türen bestehen, weiter bevorzugt mindestens 80 Prozent.

4. Anhänger nach einem der vorhergehenden Ansprüche, wobei das Chassis einen Kupplungsabschnitt mit einem Kupplungsbolzen (105) zum Zwecke des Koppeln des Anhängers an ein fünftes Rad eines Zugfahrzeugs, wie z.B. eines LKWs oder anderen Fahrzeugtyps, aufweist, wobei das Chassis bei Betrachtung in der Längsrichtung einen ersten Teil (110), der sich von dem Kupplungsabschnitt mit Kupplungsbolzen zu einer Vorderseite des Anhängers erstreckt, und einen zweiten Teil (120) aufweist, der sich von dem Kupplungsabschnitt mit Kupplungsbolzen zu einer Rückseite des Anhängers erstreckt.

5. Anhänger nach Anspruch 4, wobei das Chassis ein Paar Längsträger (101, 102) aufweist, die in einem Abstand zueinander platziert sind und durch eine Vielzahl von Querverbindungen (103) miteinander verbunden sind, wobei sich die Längsträger zumindest in dem zweiten Teil erstrecken und wobei die Biegesteifigkeit des Chassis in dem zweiten Teil auf der zweiten Seite höher als die Biegesteifigkeit des Chassis in dem zweiten Teil auf der ersten Seite ist.

6. Anhänger nach Anspruch 5, wobei die erhöhte Biegesteifigkeit des Chassis in dem zweiten Teil auf der zweiten Seite gegenüber der Biegesteifigkeit des Chassis in dem zweiten Teil auf der ersten Seite dadurch verwirklicht ist, dass der Längsträger auf der zweiten Seite in dem zweiten Teil mit mehr Biegesteifigkeit ausgebildet wird als der Längsträger auf der ersten Seite in dem zweiten Teil.

7. Anhänger nach Anspruch 5 oder 6, wobei sich die Längsträger auch in dem ersten Teil erstrecken, wobei die Biegesteifigkeit des Chassis in dem ersten Teil auf der ersten Seite höher ist als die Biegesteifigkeit des Chassis in dem ersten Teil auf der zweiten Seite;
wobei die erhöhte Biegesteifigkeit des Chassis in dem ersten Teil auf der ersten Seite gegenüber der Biegesteifigkeit des Chassis in dem ersten Teil auf der zweiten Seite vorzugsweise dadurch verwirklicht ist, dass der Längsträger auf der ersten Seite in dem ersten Teil mit mehr Biegesteifigkeit ausgebildet wird als der Längsträger auf der zweiten Seite in dem ersten Teil.

8. Anhänger nach einem der Ansprüche 5 bis 7, wobei jeder Längsträger ein erstes und zweites horizontal angeordnetes Profil (101A, 101C, 102A, 102C) aufweist, welche durch ein Querprofil (101B, 102B) gegenseitig verbunden sind, wobei die erhöhte Biegesteifigkeit eines Längsträgers oder eines Teils davon gegenüber dem anderen Längsträger oder einem Teil davon dadurch erzielt wird, dass mindestens eines des ersten horizontalen Profils, des zweiten horizontalen Profils und des Querprofils dieses Längsträgers oder eines Teils davon eine dickere Form erhält als das entsprechende erste horizontale Profil, das zweite horizontale Profil und das Querprofil des anderen Längsträgers oder eines Teils davon;
wobei eine Dicke von mindestens einem des ersten horizontalen Profils, des zweiten horizontalen Profils und des Querprofils dieses Längsträgers oder eines Teils davon vorzugsweise mindestens 25 Prozent, weiter bevorzugt 50 Prozent, größer als das entsprechende erste horizontale Profil, zweite horizontale Profil und das Querprofil des anderen Längsträgers oder eines Teils davon ist.

9. Anhänger nach einem der Ansprüche 5 bis 8, wobei das Chassis eine Gruppe von Radlagerwellen (50) aufweist, die sich nahe einer Rückseite des Anhängers befinden, wobei der zweite Teil des Chassis einen Mittelteil (120A), der sich im Wesentlichen zwischen dem ersten Teil und der Gruppe von Radlagerwellen erstreckt, und einen Endteil (120B) aufweist, der sich im Wesentlichen zwischen dem Mittelteil und der Rückseite des Anhängers erstreckt.

10. Anhänger nach Anspruch 9, wobei die Längsträger eine voneinander abweichende Biegesteifigkeit in dem Mittelteil aufweisen und/oder wobei die Längsträger im Wesentlichen dieselbe Biegesteifigkeit in dem Endteil aufweisen.

11. Anhänger nach einem der Ansprüche 9 bis 10, wobei sich der Mittelteil bei Betrachtung in der Längsrichtung von dem ersten Teil bis zu mindestens einer Position jenseits eines Mittelpunkts der Gruppe von Radlagerwellen erstreckt.

12. Anhänger nach einem der Ansprüche 9 bis 11, wobei zumindest die Radlagerwelle aus der Gruppe von Radlagerwellen, die der Rückseite am nächsten platziert ist, am Chassis luftgefedert ist, und wobei der Anhänger mit Belüftungseinrichtungen zum Belüften der Luftfederung der Radlagerwelle versehen ist, die der Rückseite am nächsten platziert ist.

13. Anhänger nach einem der vorhergehenden Ansprüche, wobei der Aufbau eine Vorderwand (30) auf der Vorderseite des Anhängers und eine Endwand (40) auf der Rückseite des Anhängers aufweist, welche die Seitenwände miteinander verbinden.

14. Anhänger nach einem der vorhergehenden Ansprüche, wobei der Aufbau weiterhin folgendes aufweist:
einen Boden (60), der auf dem Chassis angeordnet ist und der sich zwischen der Vorderwand und der Endwand erstreckt; sowie
eine obere Verbindung (22, 23), die sich in der Höhenrichtung in einem Abstand von und parallel zu dem Boden zwischen der Vorderwand und der Endwand auf der zweiten Seite des Anhängers erstreckt;
wobei die Türen bezüglich des Bodens und/oder der oberen Verbindung verriegelt werden können.

15. Anhänger nach Anspruch 14, wobei die Türen von einem ersten Türabschnitt (11) und einem zweiten Türabschnitt (12) gebildet werden, wobei jeder Türabschnitt eine Vielzahl von Türpaneelen (11A, 11B, 11C, 12A, 12B, 12C) aufweist, die zueinander verschwenkbar verbunden sind, wobei zumindest ein Türpaneel des ersten und zweiten Türabschnitts mit dem Boden und/oder der oberen Verbindung verriegelt werden kann;
wobei ein Türpaneel des ersten Türabschnitts vorzugsweise eine erste Kupplungseinrichtung aufweist und wobei ein Türpaneel des zweiten Türabschnitts eine zweite Kupplungseinrichtung aufweist, wobei die erste und die zweite Kupplungseinrichtung zum gegenseitigen Koppeln ausgeführt sind, um dadurch die Türen des Anhängers zu verschließen, und/oder die erste und die zweite Kupplungseinrichtung jeweils so ausgeführt sind, dass sie mit der oberen Verbindung und/oder dem Boden gekoppelt werden, um dadurch die Türen des Anhängers zu verschließen.

## Revendications

1. Remorque (1) comprenant un châssis allongé (100) et une superstructure agencée sur le châssis, dans laquelle la remorque a un premier côté et un deuxième côté opposé, chacun s'étendant sensiblement parallèlement par rapport à un axe longitudinal central du châssis ;
dans laquelle sur le premier côté, une paroi latérale (20) de la superstructure prend pour l'essentiel une forme fixe, par exemple avec des parties de plaque disposées de manière fixe, et dans laquelle sur le deuxième côté, une paroi latérale (10) de la superstructure est équipée pour l'essentiel de portes (11, 12) ;
**caractérisée en ce que** le châssis a une forme asymétrique par rapport à l'axe longitudinal central destinée à compenser au moins partiellement une diminution de la rigidité à la flexion sur le deuxième côté de la remorque à la suite de l'ouverture des portes.

2. Remorque selon la revendication 1, dans laquelle le châssis est configuré de sorte que la remorque présente une rigidité à la flexion entre les premier et deuxième côtés à l'état de portes fermées qui est plus asymétrique que la rigidité à la flexion entre les premier et deuxième côtés à l'état de portes ouvertes, dans laquelle le châssis est de préférence configuré de sorte que la remorque présente sensiblement la même rigidité à la flexion sur les premier et deuxième côtés à l'état de portes ouvertes.

3. Remorque selon la revendication 1 ou 2, dans laquelle la paroi latérale sur le premier côté ne comprend pas de porte, et dans laquelle au moins 60 pour cent d'une surface de la paroi latérale sur le deuxième côté est constituée par des portes, de manière davantage préférée au moins 80 pour cent.

4. Remorque selon l'une quelconque des revendications précédentes, dans laquelle le châssis comprend une section de couplage avec une broche de couplage (105) destinée à coupler la remorque à une cinquième roue d'un véhicule tracteur, tel qu'un camion ou un autre type de véhicule, dans laquelle le châssis comprend, vue dans la direction longitudinale, une première partie (110) qui s'étend de la section de couplage avec broche de couplage à un côté avant de la remorque, et une deuxième partie (120) qui s'étend de la section de couplage avec une broche de couplage à un côté arrière de la remorque.

5. Remorque selon la revendication 4, dans laquelle le châssis comprend une paire de poutres longitudinales (101, 102) qui sont placées à distance l'une de l'autre et sont connectées entre elles par une pluralité de connexions transversales (103), dans laquelle les poutres longitudinales s'étendent au moins dans la deuxième partie, et dans laquelle la rigidité à la flexion du châssis dans la deuxième partie sur le deuxième côté est supérieure à la rigidité à la flexion du châssis dans la deuxième partie sur le premier côté.

6. Remorque selon la revendication 5, dans laquelle l'augmentation de rigidité à la flexion du châssis dans la deuxième partie sur le deuxième côté par rapport à la rigidité à la flexion du châssis dans la deuxième partie sur le premier côté est réalisée en incorporant la poutre longitudinale sur le deuxième côté dans la deuxième partie avec une plus grande rigidité à la flexion que la poutre longitudinale sur le premier côté dans la deuxième partie.

7. Remorque selon la revendication 5 ou 6, dans laquelle les poutres longitudinales s'étendent également dans la première partie, dans laquelle la rigidité à la flexion du châssis dans la première partie sur le premier côté est supérieure à la rigidité à la flexion du châssis dans la première partie sur le deuxième côté ;
dans laquelle l'augmentation de rigidité à la flexion du châssis dans la première partie sur le premier côté par rapport à la rigidité à la flexion du châssis dans la première partie sur le deuxième côté est de préférence réalisée en incorporant la poutre longitudinale sur le premier côté dans la première partie avec une plus grande rigidité à la flexion que la poutre longitudinale sur le deuxième côté dans la première partie.

8. Remorque selon l'une quelconque des revendications 5 à 7, dans laquelle chaque poutre longitudinale comprend des première et deuxième sections (101A, 101C, 102A, 102C) disposées horizontalement qui sont mutuellement connectées par une section transversale (101B, 102B), dans laquelle l'augmentation de rigidité à la flexion d'une poutre longitudinale ou d'une partie de celle-ci par rapport à l'autre poutre longitudinale ou à une partie de celle-ci est obtenue en donnant à au moins une parmi la première section horizontale, la deuxième section horizontale et la section transversale de cette poutre longitudinale ou d'une partie de celle-ci une forme plus épaisse que la première section horizontale, la deuxième section horizontale et la section transversale respective de l'autre poutre longitudinale ou d'une partie de celle-ci ;
dans laquelle une épaisseur d'au moins une parmi la première section horizontale, la deuxième section horizontale et la section transversale de cette poutre longitudinale ou d'une partie de celle-ci est de préférence au moins 25 pour cent supérieure, de manière davantage préférée 50 pour cent, à la première section horizontale, à la deuxième section horizontale et à la section transversale respective de l'autre poutre longitudinale ou d'une partie de celle-ci.

9. Remorque selon l'une quelconque des revendications 5 à 8, dans laquelle le châssis comprend un groupe d'arbres porteurs de roues (50) qui sont situés à proximité d'un côté arrière de la remorque, dans laquelle la deuxième partie du châssis a une partie médiane (120A) qui s'étend sensiblement entre la première partie et le groupe d'arbres porteurs de roues, et une partie d'extrémité (120B) qui s'étend sensiblement entre la partie médiane et le côté arrière de la remorque.

10. Remorque selon la revendication 9, dans laquelle les poutres longitudinales ont une rigidité à la flexion mutuellement différente dans la partie médiane, et/ou dans laquelle les poutres longitudinales ont sensiblement la même rigidité à la flexion dans la partie d'extrémité.

11. Remorque selon l'une quelconque des revendications 9 et 10, dans laquelle la partie médiane s'étend de la première partie à au moins une position au-delà d'un point central du groupe d'arbres porteurs de roues, vue dans la direction longitudinale.

12. Remorque selon l'une quelconque des revendications 9 à 11, dans laquelle au moins l'arbre porteur de roue du groupe d'arbres porteurs de roues qui est le plus près du côté arrière est à suspension pneumatique depuis le châssis, et dans laquelle la remorque est équipée de moyens de ventilation pour ventiler la suspension pneumatique de l'arbre porteur de roue placé le plus près du côté arrière.

13. Remorque selon l'une quelconque des revendications précédentes, dans laquelle la superstructure comprend une paroi avant (30) sur le côté avant de la remorque et une paroi d'extrémité (40) sur le côté arrière de la remorque, qui connectent les parois latérales l'une à l'autre.

14. Remorque selon l'une quelconque des revendications précédentes, dans laquelle la superstructure comprend en outre :
un plancher (60) qui est placé sur le châssis et qui s'étend entre la paroi avant et la paroi d'extrémité ; et
une connexion supérieure (22, 23) qui s'étend dans une direction à une certaine distance du plancher et parallèlement à celui-ci entre la paroi avant et la paroi d'extrémité sur le deuxième côté de la remorque ;
dans laquelle les portes peuvent être verrouillées par rapport au plancher et/ou à la connexion supérieure.

15. Remorque selon la revendication 14, dans laquelle les portes sont formées par une première section de porte (11) et une deuxième section de porte (12), chaque section de porte comprenant une pluralité de panneaux de porte (11A, 11B, 11C, 12A, 12B, 12C) connectés de manière à pouvoir pivoter mutuellement, dans laquelle au moins un panneau de porte des première et deuxième sections de porte peut être verrouillé au plancher et/ou à la connexion supérieure ;
dans laquelle un panneau de porte de la première section de porte comprend de préférence des premiers moyens de couplage, et dans laquelle un panneau de porte de la deuxième section de porte comprend des deuxièmes moyens de couplage, dans laquelle les premiers et deuxièmes moyens de couplage sont configurés pour un couplage mutuel destiné à fermer les portes de la remorque, et/ou les premier et deuxième moyens de couplage sont chacun configurés pour un couplage à la connexion supérieure et/ou au plancher destiné à fermer les portes de la remorque.
